# EUROPEAN PATENT APPLICATION

(11) **EP 4 557 081 A1**
(43) Date of publication of application: **21.05.2025**
(21) Application number: 23849198.9
(22) Date of filing: 17.07.2023
(51) Int. Cl.: G06F 8/41

(54) **APPLICATION ACCELERATION METHOD AND APPARATUS, AND RELATED DEVICE**

(30) Priority: 04.08.2022 CN 202210932620
(71) Applicant: Huawei Technologies Co., Ltd., Shenzhen, Guangdong 518129 (CN)
(72) Inventor: WANG, Kai, Shenzhen, Guangdong 518129 (CN)
(74) Representative: Grünecker Patent- und Rechtsanwälte PartG mbB
(86) International application number: PCT/CN2023/107687
(87) International publication number: WO 2024/027490

(57) **Abstract**

This application provides an application acceleration method and apparatus, and a related device. The method includes: A computing device obtains first code corresponding to an application, where the first code includes one or more different types of variables; and deploys operators in the first code in different hardware chips based on the operators in the first code and types of variables included in the operators. The computing device stores operators and variable types that the different hardware chips are suitable for computing. During application deployment, the application is deployed in the different hardware chips in a unit of an operator based on the operators or the variable types that the different hardware chips are suitable for computing, to accelerate the application.

## Description

This application claims priority to Chinese Patent Application No. 202210932620.3, filed with the China National Intellectual Property Administration on August 4, 2022 and entitled "APPLICATION ACCELERATION METHOD AND APPARATUS, AND RELATED DEVICE", which is incorporated herein by reference in its entirety.

### TECHNICAL FIELD

This application relates to the field of computer technologies, and in particular, to an application acceleration method and apparatus, and a related device.

### BACKGROUND

Currently, a data type of data used in an application such as a high-performance computing (high-performance computing, HPC) application and engineering simulation is usually a high-precision floating point (floating point, FP) type, for example, FP128 or FP64. However, using data of a high-precision floating point type for all variables is an "over-engineered" (over-engineered) implementation. In this implementation, a large amount of data is generated in an operation process, resulting in a large operation amount, and affecting computation efficiency. Therefore, how to accelerate an application is a technical problem that needs to be resolved.

### SUMMARY

This application provides an application acceleration method and apparatus, and a related device, so that different operators in an application can be deployed in different hardware chips, to accelerate the application.

According to a first aspect, this application provides an application acceleration method, including: A computing device obtains first code corresponding to an application, where the first code includes one or more different types of variables; and deploys operators in the first code in different hardware chips based on the operators in the first code and types of variables included in the operators.

It should be understood that the first code may be source code of the application, or may be obtained by converting high-precision variables in the source code of the application into low-precision variables. When the first code includes different types of variables, precision of the different types of variables is different. For example, the first code includes variables of an FP64 type and an FP32 type, and precision of data corresponding to the variable of the FP64 type is higher than precision of data corresponding to the variable of the FP32 type.

The computing device stores operators and variable types that the different hardware chips are suitable for computing. During application deployment, the application can be deployed in the different hardware chips in a unit of an operator based on the operators or the variable types that the different hardware chips are suitable for computing, to accelerate the application.

In a possible implementation, the first code is obtained by converting second code, and the second code includes high-precision first-type variables. The computing device obtains the second code corresponding to the application, and converts a part or all of first-type variables in the second code into second-type variables, to obtain the first code, where precision of data corresponding to the first-type variable is higher than precision of data corresponding to the second-type variable. For example, the first-type variables are FP64-type variables, and the second-type variables are FP32-type variables. The second code may be source code of the application, or may be obtained by converting high-precision variables in the source code of the application into low-precision variables.

It should be understood that high precision and low precision in this application are relative concepts, and the high precision and the low precision do not refer to specific data of one or more data types or variable types. For example, FP128 data is high-precision data relative to FP64 data, and the FP64 data is low-precision data relative to FP128 data. The FP64 data is high-precision data relative to FP32 data, and the FP32 data is low-precision data relative to the FP64 data.

High-precision variables in the source code of the application are converted into low-precision variables, so that storage space occupied by the application in an execution process can be reduced, an amount of data generated in the execution process can be reduced, and execution efficiency can be improved. For example, when an artificial intelligence model is trained according to a distributed method, precision of variables is reduced, so that an amount of data generated in a training process can be reduced, communication traffic between different computing devices in distributed training can be reduced, and computation efficiency can be improved.

In a possible implementation, the converting a part or all of first-type variables in the second code into second-type variables includes: The computing device divides the first-type variables in the second code into n sets, where each set includes a plurality of variables, and n is a positive integer; and traverses the n sets, determines that variables in an i^{th} set in the n sets can be converted from first-type variables into second-type variables, and converts the variables that are in the second code and that belong to the i^{th} set from first-type variables into second-type variables.

It should be understood that the computing device can determine, at one time, whether all variables in a set can be converted from first-type variables into second-type variables. The i^{th} set is any one of the n sets, that is, the computing device determines whether variables in each of the n sets can be converted into second-type variables. When n is equal to 1, it means that all first-type variables in the second code are first converted into second-type variables, and whether all the first-type variables in the second code can be converted into second-type variables is determined.

In comparison with sequentially traversing each variable in code to determine whether each variable can be converted from high-precision variable into low-precision variable, the first-type variables are divided into one or more sets, and whether all variables in one set can be converted from high-precision variables into low-precision variables is determined each time, so that variables that can be converted into low-precision variables and that are in the code can be determined in shorter time. In this way, the determined variables that can be converted into low-precision variables are converted into low-precision variables, code conversion complexity is reduced, and conversion efficiency is improved.

In a possible implementation, the determining that variables in an i^{th} set in the n sets can be converted from first-type variables into second-type variables includes: The computing device executes second code, to determine a reference execution result obtained by executing the second code; converts the variables in the i^{th} set into second-type variables, where variables in the other n-1 sets remain as first-type variables, to obtain first intermediate code corresponding to the i^{th} set, and executes the first intermediate code, to obtain a first execution result; and when the first execution result of the first intermediate code and the reference execution result satisfy a preset condition, for example, an error between the first execution result and the reference execution result is less than or equal to a preset value, determines that the variables in the i^{th} set can be converted from first-type variables into second-type variables, where i is a positive integer less than or equal to n.

A variable type of variables in a set is converted from a first type with high precision into a second type with low precision, and a variable type of variables in another set remains unchanged, to obtain the first code. Then, the first code is executed, and an execution result of the first code is compared with an execution result of the second code. When the two execution results satisfy a preset condition, for example, a residual error between the two execution results is less than or equal to a preset value, it indicates that after the variables in the set in the second code are converted from high-precision variables into low-precision variables, an execution result of the code is less affected, and the variables in the set can be converted from high-precision variables into low-precision variables.

In a possible implementation, when the first execution result of the first intermediate code and the reference execution result do not satisfy the preset condition, that is, not all variables in the i^{th} set can be converted from first-type variables into second-type variables, the computing device divides the variables in the i^{th} set into m subsets, where each subset includes a plurality of variables in the i^{th} set, and m is a positive integer greater than 1; converts variables in a j^{th} subset into second-type variables, to obtain second intermediate code corresponding to the j^{th} subset, and executes the second intermediate code, to obtain a second execution result; and when the second execution result of the second intermediate code and the reference execution result satisfy a preset condition, determines that the variables in the j^{th} subset can be converted from first-type variables into second-type variables, where j is a positive integer less than or equal to m.

When the execution result of the first code and the execution result of the second code do not satisfy the preset condition, it indicates that after all the variables in the set in the second code are converted from high-precision first-type variables into low-precision second-type variables, an execution result of the application is greatly affected. In this case, the variables in the set are divided into a plurality of subsets, and whether variables in each subset can be converted from high-precision variables into low-precision variables is determined, that is, whether a part of variables in the set can be converted from high-precision variables into low-precision variables is determined.

In a possible implementation, variables in the j^{th} subset in the second intermediate code are second-type variables, variables in m-1 subsets other than the j^{th} subset in the m subsets are first-type variables, variables in a target set in n-1 sets other than the i^{th} set in the n sets are converted into second-type variables, and the target set is a set to which determined variables that can be converted into second-type variables belong.

In a possible implementation, variables in the j^{th} subset in the second intermediate code are second-type variables, variables in m-1 subsets other than the j^{th} subset in the m subsets are first-type variables, and variables in n-1 sets other than the i^{th} set in the n sets are first-type variables.

If not all the variables in the i^{th} set can be converted from first-type variables into second-type variables, the variables in the i^{th} set are divided into a plurality of subsets, and after the variables in the j^{th} subset are converted into second-type variables, variables in another subset remain as first-type variables, all variables in n-1 sets other than the i^{th} set may remain as first-type variables, or determined variables that are in the other n-1 sets and that can be converted into second-type variables may be converted into second-type variables.

In a possible implementation, the deploying operators in the first code in different hardware chips based on the operators in the first code and types of variables included in the operators includes:
determining, based on the operators in the first code, the types of the variables included in the operators, and a mapping relationship, the hardware chips configured to execute the operators, and deploying the operators in the first code in the different hardware chips, where the mapping relationship includes optimization degrees of the different hardware chips for the different operators, and the optimization degrees indicate efficiency of processing the corresponding operators by the hardware chips.

The computing device stores operators and/or variable types that the different hardware chips are suitable for computing. During application deployment, the application can be deployed in the different hardware chips in a unit of an operator based on the operators or the variable types that the different hardware chips are suitable for computing, to accelerate the application. In addition, because a part or all of high-precision variables in the source code of the application are converted into low-precision variables, memory occupation can be reduced, and an amount of data generated in a computation process can be reduced. In this way, a computation amount is reduced, and computation efficiency is improved.

According to a second aspect, this application provides an application acceleration apparatus, including: a communication module, configured to obtain first code corresponding to an application, where the first code includes one or more different types of variables; and a deployment module, configured to deploy operators in the first code in different hardware chips based on the operators in the first code and types of variables included in the operators.

In a possible implementation, the first code is obtained by converting second code, and the second code includes high-precision first-type variables. The application acceleration apparatus further includes a conversion module, configured to: obtain the second code corresponding to the application, and convert a part or all of first-type variables in the second code into second-type variables, to obtain the first code, where precision of data corresponding to the first-type variable is higher than precision of data corresponding to the second-type variable. For example, the first-type variables are FP64-type variables, and the second-type variables are FP32-type variables. The second code may be source code of the application, or may be obtained by converting high-precision variables in the source code of the application into low-precision variables.

In a possible implementation, the conversion module is specifically configured to: divide the first-type variables in the second code into n sets, where each set includes a plurality of variables, and n is a positive integer; and determine that variables in an i^{th} set in the n sets can be converted from first-type variables into second-type variables, and convert the variables that are in the second code and that belong to the i^{th} set from first-type variables into second-type variables.

In a possible implementation, the conversion module is specifically configured to: execute second code, to determine a reference execution result obtained by executing the second code; convert the variables in the i^{th} set into second-type variables, where variables in the other n-1 sets remain as first-type variables, to obtain first intermediate code corresponding to the i^{th} set, and execute the first intermediate code, to obtain a first execution result; and when the first execution result of the first intermediate code and the reference execution result satisfy a preset condition, for example, an error between the first execution result and the reference execution result is less than or equal to a preset value, determine that the variables in the i^{th} set can be converted from first-type variables into second-type variables, where i is a positive integer less than or equal to n.

In a possible implementation, the conversion module is further configured to: when the first execution result of the first intermediate code and the reference execution result do not satisfy the preset condition, that is, not all variables in the i^{th} set can be converted from first-type variables into second-type variables, divide, by the computing device, the variables in the i^{th} set into m subsets, where each subset includes a plurality of variables in the i^{th} set, and m is a positive integer greater than 1; convert variables in a j^{th} subset into second-type variables, to obtain second intermediate code corresponding to the j^{th} subset, and execute the second intermediate code, to obtain a second execution result; and when the second execution result of the second intermediate code and the reference execution result satisfy a preset condition, determine that the variables in the j^{th} subset can be converted from first-type variables into second-type variables, where j is a positive integer less than or equal to m.

In a possible implementation, variables in the j^{th} subset in the second intermediate code are second-type variables, variables in m-1 subsets other than the j^{th} subset in the m subsets are first-type variables, variables in a target set in n-1 sets other than the i^{th} set in the n sets are converted into second-type variables, and the target set is a set to which determined variables that can be converted into second-type variables belong.

In a possible implementation, variables in the j^{th} subset in the second intermediate code are second-type variables, variables in m-1 subsets other than the j^{th} subset in the m subsets are first-type variables, and variables in n-1 sets other than the i^{th} set in the n sets are first-type variables.

In a possible implementation, the deployment module is specifically configured to: determine, based on the operators in the first code, the types of the variables included in the operators, and a mapping relationship, the hardware chips configured to execute the operators, and deploy the operators in the first code in the different hardware chips, where the mapping relationship includes optimization degrees of the different hardware chips for the different operators, and the optimization degrees indicate efficiency of processing the corresponding operators by the hardware chips.

According to a third aspect, this application provides a computing device, including a processor and a memory. The memory is configured to store instructions, the processor is configured to execute the instructions. When the processor executes the instructions, the application acceleration method in any one of the first aspect or the possible implementations of the first aspect is performed.

According to a fourth aspect, this application provides a computer program product. When the computer program product runs on a server, the server is enabled to perform the application acceleration method in any one of the first aspect or the possible implementations of the first aspect.

According to a fifth aspect, this application provides a computer-readable storage medium. The computer-readable storage medium stores instructions. When the instructions are run on a server, the server is enabled to perform the application acceleration method in any one of the first aspect or the possible implementations of the first aspect.

### BRIEF DESCRIPTION OF DRAWINGS

To describe technical solutions in embodiments of this application more clearly, the following briefly describes the accompanying drawings for describing embodiments. It is clear that the accompanying drawings in the following descriptions show some embodiments of this application, and a person of ordinary skill in the art may still derive other drawings from these accompanying drawings without creative efforts.
FIG. 1 is a schematic flowchart of an application acceleration method according to an embodiment of this application;
FIG. 2 is a diagram of operator deployment according to an embodiment of this application;
FIG. 3 is a diagram of determining whether variables can be converted according to an embodiment of this application;
FIG. 4 is a diagram of an application acceleration apparatus according to an embodiment of this application;
FIG. 5 is a diagram of a computing device according to an embodiment of this application; and
FIG. 6 is a diagram of an application acceleration system according to an embodiment of this application.

### DESCRIPTION OF EMBODIMENTS

The following describes the technical solutions of this application with reference to the accompanying drawings.

High-performance computing (High-Performance Computing, HPC) is to complete data-intensive, compute-intensive, and data input/output (input/output, I/O) intensive computing in fields such as scientific research, engineering design, finance, industry, and social management by using an effective algorithm.

Currently, a data type of data used in an application such as an HPC application and engineering simulation is usually a high-precision floating point type, for example, FP128 or FP64. However, using data of a high-precision floating point type for all data is an "over-engineered" (over-engineered) implementation, and the data of the high-precision floating point type occupies large storage space. In this implementation, a waste of memory is caused in an application execution process, an operation amount in a computation process is large, and computation efficiency is affected. Therefore, how to accelerate an application is a technical problem that needs to be resolved.

As a speed of improving performance of a CPU cannot satisfy an increasing computing requirement of an application, to greatly improve performance and efficiency of a typical application, for example, improve a speed of training an artificial intelligence (Artificial Intelligence, AI) model, a processor develops toward compute-intensive dedicated hardware, and a compute-intensive hardware chip includes a graphics processing unit (graphics processing unit, GPU), an embedded neural network processing unit (neural network processing unit, NPU), a tensor processing unit (tensor processing unit, TPU), a data processing unit (data processing unit, DPU), an accelerated processing unit (accelerated processing unit, APU), a floating processing unit (floating processing unit, FPU), an application-specific integrated circuit (application-specific integrated circuit, ASIC), a programmable logic device (programmable logic device, PLD), a field programmable logic gate array (field programmable gate array, FPGA), or the like. Because some applications do not have a high requirement on data precision, the compute-intensive hardware chip usually has a capability of processing low-precision (for example, FP32 and FP16) data stronger than that of a general-purpose CPU, that is, different hardware chips are suitable for processing data of different data types.

In embodiments of this application, the data types include types such as an FP128 type, an FP64 type, an FP32 type, and an FP16 type. The data type can indicate data precision. For example, precision of FP128 data is precision of a floating-point number represented by using 128 bits, and the precision of the FP128 data is higher than precision of FP64 data. It should be noted that high precision and low precision in embodiments of this application are relative concepts, and the high precision and the low precision do not refer to specific data of one or more data types. For example, the FP128 data is high-precision data relative to the FP64 data, and the FP64 data is low-precision data relative to the FP128 data. The FP64 data is high-precision data relative to FP32 data, and the FP32 data is low-precision data relative to the FP64 data. The FP32 data is high-precision data relative to FP16 data, and the FP16 data is low-precision data relative to the FP32 data.

It should be understood that a variable type corresponding to a variable is the same as a data type corresponding to the variable, and the variable type also includes FP128, FP64, FP32, FP16, or the like. The variable type indicates a data type assigned to a variable when the variable is declared or defined. When code of an application is not executed, no value is assigned to a variable, but a variable type of the variable is declared or defined. The variable type of the variable is in one-to-one correspondence with a data type of data. For example, for a variable whose variable type is FP128, a data type of data when a value is assigned to the variable is FP128 data; and for a variable whose variable type is FP32, a data type of data when a value is assigned to the variable is FP32 data. That is, when the code is not run, the data type of the data corresponding to the variable is replaced with the variable type. Precision of the variable is precision of data corresponding to the variable type. Therefore, the variable type can also indicate precision of the data corresponding to the variable. For example, if the variable type is FP64, it indicates that precision of data corresponding to the variable to which a value is assigned is precision of FP64 data.

Embodiments of this application provide an application acceleration method, to accelerate an application by using different hardware chips. A computing device first obtains first code corresponding to an application that needs to be accelerated, where the first code includes one or more different variable types of variables. For example, the first code includes first-type variables, or the first code includes first-type variables and second-type variables. Precision of data corresponding to the first-type variable is higher than precision of data corresponding to the second-type variable. For example, the first-type variables are FP64-type variables, and the second-type variables are FP32-type variables. Then, the computing device determines, based on operators in the first code and types of variables in the operators, hardware chips configured to execute the operators, and deploys different operators in the first code in the different hardware chips, and the different hardware chips jointly execute the application, to accelerate the application.

In a possible implementation, the first code may be obtained by converting second code. The second code may be source code of the application, or the second code may be obtained by converting the source code of the application. For a method for converting the source code into the second code, refer to the following method for converting the second code into first code. Details are not described herein. When the first code is obtained by converting the second code, the computing device first obtains the second code corresponding to the application that needs to be accelerated, determines variables that are in the second code and that can be converted from high-precision variables into low-precision variables, and then converts, into low-precision variables, the determined variables that can be converted from high-precision variables into low-precision variables, to obtain the first code. The second code includes variables of one or more types of precision. For example, the second code includes only first-type variables. The computing device determines variables that are in the second code and that can be converted from first-type variables into second-type variables, and then converts, into second-type variables, the determined variables that are in the second code and that can be converted into second-type variables, to obtain the first code. Alternatively, the second code includes first-type variables and second-type variables. The computing device determines variables that are in the second code and that can be converted from first-type variables into second-type variables, and then converts, into second-type variables, the determined variables that are in the second code and that can be converted into second-type variables, to obtain the first code.

In the foregoing method, variables that are in the source code of the application and that can be converted from variables of a high-precision type into variables of a low-precision type are first determined. After a part or all of variables in the application are converted from high-precision variables into low-precision variables, an execution result obtained by executing the application and an execution result obtained before the variable type is converted need to satisfy a preset condition, to avoid an excessively large error or even divergence that is of a final computation result and that is caused by converting the variable type. Then, all variables that can be converted into low-precision variables in the source code are converted into low-precision variables. Finally, the hardware chips configured to execute the operators are determined in a unit of an operator based on the operators and the types of the variables included in the operators, so that the application is executed by using the different hardware chips, to accelerate the application.

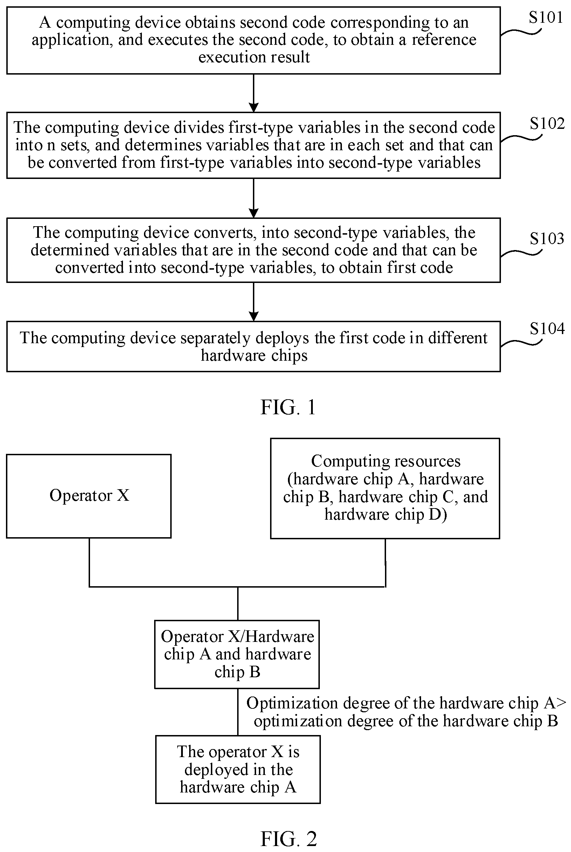

With reference to the accompanying drawings, the following describes in detail a method for accelerating an application when variables in code corresponding to the application can be converted from high-precision variables into low-precision variables. FIG. 1 is a schematic flowchart of an application acceleration method according to an embodiment of this application. The method includes S101 to S104.

S101: A computing device obtains second code corresponding to an application, and executes the second code, to obtain a reference execution result.

The computing device executes the second code of the application, to obtain the reference execution result of executing the second code. The second code of the application includes one or more types of variables. For example, the types of the variables in the second code are all a first type, or the types of the variables in the second code include a first type and a second type, or the types of the variables in the second code include a first type, a second type, and a third type. Precision of data corresponding to a first-type variable is higher than precision of data corresponding to a second-type variable, and the precision of the data corresponding to the second-type variable is higher than precision of data corresponding to a third-type variable. Storage space occupied by data corresponding to one first-type variable is larger than storage space occupied by data corresponding to one second-type variable, and the storage space occupied by the data corresponding to one second-type variable is larger than storage space occupied by data corresponding to one third-type variable. For example, the first type may be FP128, the second type is FP64, and the third type is FP32. Alternatively, the first type may be FP64, the second type is FP32, and the third type is FP16. This is not specifically limited in embodiments of this application.

It should be understood that the second code may be source code corresponding to the application, or may be code obtained by converting the source code corresponding to the application, for example, obtained by converting a part or all of high-precision variables in the source code into low-precision variables.

S102: The computing device divides first-type variables in the second code into n sets, and determines variables that are in each set and that can be converted from first-type variables into second-type variables.

The computing device obtains the first-type variables in the second code, and first divides the first-type variables into the n sets, where each set includes a plurality of variables in the first-type variables, the variables in each set are different from each other, and n is a positive integer. Then, the computing device separately determines whether the variables in each set can be converted from first-type variables into second-type variables. A method for determining, by the computing device, whether the variables in each set can be converted from first-type variables into second-type variables includes the following S1021 to S1024.

S1021: Convert first-type variables in an i^{th} set into second-type variables, to obtain first intermediate code, and execute the first intermediate code, to obtain a first execution result of the first intermediate code.

The computing device obtains the first-type variables in the second code, and divides the first-type variables into the n sets, where each set includes the plurality of variables in the first-type variables, and n is a positive integer. Then, the variables that are in the second code and that belong to the i^{th} set are converted from first-type variables into second-type variables, and a type of variables that are in the second code and that belong to other n-1 sets remains unchanged, to obtain the first intermediate code corresponding to the i^{th} set. The computing device executes the first intermediate code corresponding to the i^{th} set, to obtain the first execution result of the first intermediate code corresponding to the i^{th} set. i is a positive integer less than or equal to n.

It should be noted that the i^{th} set is any one of the n sets. That is, the computing device performs the foregoing operations on each of the n sets. After the foregoing operations are performed on each set, the first intermediate code corresponding to each set can be obtained, and the first execution result of executing the first intermediate code corresponding to each set can be obtained. The computing device can perform the foregoing operations on each of the n sets in parallel, to obtain the first execution result of the first intermediate code corresponding to each set.

For example, after the computing device divides the first-type variables in the second code into three sets, the computing device converts variables that are in the second code and that belong to a 1^{st} set from first-type variables into second-type variables, and a type of variables that are in the second code and that belong to the other two sets remains unchanged, to obtain a first intermediate code corresponding to the 1^{st} set. The computing device executes the first intermediate code corresponding to the 1^{st} set, to obtain a first execution result of the first intermediate code corresponding to the 1^{st} set. In addition, the computing device converts variables that are in the second code and that belong to a 2^{nd} set from first-type variables into second-type variables, and a type of variables that are in the second code and that belong to the other two sets remains unchanged, to obtain a first intermediate code corresponding to the 2^{nd} set. The computing device executes the first intermediate code corresponding to the 2^{nd} set, to obtain a first execution result of the first intermediate code corresponding to the 2^{nd} set. In addition, the computing device converts variables that are in the second code and that belong to a 3^{rd} set from first-type variables into second-type variables, and a type of variables that are in the second code and that belong to the other two sets remains unchanged, to obtain a first intermediate code corresponding to the 3^{rd} set. The computing device executes the first intermediate code corresponding to the 3^{rd} set, to obtain a first execution result of the first intermediate code corresponding to the 3^{rd} set.

In a possible implementation, when the first-type variables are divided into the n sets, a plurality of first-type variables may be divided into the n sets according to a preset rule. For example, the first-type variables are evenly divided into the n sets based on a quantity, or quantities of variables included in the n sets are in a geometric progression or an arithmetic progression.

In a possible implementation, when the first-type variables are divided into the n sets, the variables in each set have a coupling relationship. To be specific, for variables in a same set, whether one variable can be converted from high-precision variable into low-precision variable affects whether another variable or other variables in the same set can be converted from high-precision variable into low-precision variable. If not all variables in a set can be converted from high-precision variables into low-precision variables, after the variables in the set are divided into a plurality of subsets, not all variables in at least one of the plurality of subsets can be converted from high-precision variables into low-precision variables.

S1022: The computing device determines whether the first execution result of the first intermediate code corresponding to the i^{th} set and the reference execution result satisfy a preset condition, and performs S1023 when the first execution result and the reference execution result do not satisfy the preset condition, or performs S1024 when the first execution result and the reference execution result satisfy the preset condition.

After the computing device obtains the first execution result of the first intermediate code corresponding to the i^{th} set, the computing device needs to determine, based on the first execution result of the first intermediate code and the reference execution result, whether the first-type variables in the i^{th} set can be converted into second-type variables. The computing device determines an error between the first execution result and the reference execution result. When the error is greater than a first threshold, the computing device determines that the first execution result of the first intermediate code corresponding to the i^{th} set and the reference execution result do not satisfy the preset condition, and it indicates that an execution result of the application is greatly affected after the variables in the i^{th} set are converted into second-type variables. The computing device determines that the variables in the i^{th} set cannot be converted into second-type variables, and the computing device performs S1023. When the error is less than or equal to the first threshold, the computing device determines that the first execution result and the reference execution result satisfy the preset condition, the computing device determines that all the variables in the i^{th} set can be converted into second-type variables, and the computing device performs S1024. For example, the computing device calculates a residual error between the first execution result and the reference execution result. When the residual error is less than or equal to the first threshold, the computing device determines that the first execution result and the reference execution result satisfy the preset condition. When the residual error is greater than the threshold, the computing device determines that the first execution result and the reference execution result do not satisfy the preset condition.

In this embodiment of this application, for any one of the n sets, the computing device determines, by performing the operations described in S1021 and S1022, whether the variables in each set can be converted from first-type variables into second-type variables. If the computing device determines, through the operations described in S1021 and S1022, that variables in a set cannot be converted from first-type variables into second-type variables, the computing device performs the operation described in S1023 on the variables in the set. If the computing device determines, through the operations described in S1021 and S1022, that variables in a set can be converted from first-type variables into second-type variables, the computing device performs the operation described in S1024 on the variables in the set.

It should be noted that the computing device may first convert all the first-type variables in the second code into second-type variables, to obtain intermediate code, execute the intermediate code, to obtain a corresponding execution result, and perform the operations described in S102 only when the execution result corresponding to the intermediate code and the reference execution result do not satisfy a preset condition.

S1023: Divide the variables in the i^{th} set into m subsets, convert first-type variables in a j^{th} subset into second-type variables, to obtain second intermediate code, and execute the second intermediate code, to obtain a second execution result of the second intermediate code.

When the first execution result of the first intermediate code corresponding to the i^{th} set and the reference execution result do not satisfy the preset condition, it indicates that not all the variables in the i^{th} set can be converted from first-type variables into second-type variables. In this case, the variables in the i^{th} set are further divided into the m subsets, and each subset includes different variables in the i^{th} set, where m is a positive integer greater than 1. Then, variables that are in the second code and that belong to the j^{th} subset are converted from first-type variables into second-type variables, and variables that are in the second code and that belong to the other m-1 subsets remain as first-type variables. For variables in a set other than the i^{th} set, for example, variables in a k^{th} set, if it is determined in S1022 that the variables in the k^{th} set can be converted into second-type variables, when whether the variables in the j^{th} subset can be converted into second-type variables is determined, the variables that are in the second code and that belong to the k^{th} set may be converted into second-type variables, or the variables that are in the second code and that belong to the k^{th} set may remain as the first-type variables, which is not specifically limited in embodiments of this application; if it is determined in S1022 that the variables in the k^{th} set cannot be converted into second-type variables, when whether the variables in the j^{th} subset can be converted into second-type variables is determined, the variables that are in the second code and that belong to the k^{th} set remain as the first-type variables. After the variables in the second code are converted according to the foregoing method, the second intermediate code corresponding to the j^{th} subset is obtained, and the second intermediate code corresponding to the j^{th} subset is executed, to obtain the second execution result of the second intermediate code corresponding to the j^{th} subset.

If the computing device determines that the second execution result of the second intermediate code corresponding to the j^{th} subset and the reference execution result satisfy a preset condition, the computing device determines that the variables in the j^{th} subset can be converted into second-type variables. If the computing device determines that the second execution result of the second intermediate code corresponding to the j^{th} subset and the reference execution result do not satisfy the preset condition, the computing device determines that the variables in the j^{th} subset cannot be converted into second-type variables.

It should be understood that the j^{th} subset is any one of the m subsets. To be specific, the computing device performs the foregoing operations on each of the m subsets obtained by dividing the i^{th} set. After the foregoing operations are performed on each subset, the second intermediate code corresponding to each subset can be obtained, and the second execution result of executing the second intermediate code corresponding to each subset can be obtained. In addition, the computing device can perform the foregoing operations on each of the m subsets in parallel, to obtain the second execution result of second intermediate code corresponding to each subset, and further determine whether variables in each subset can be converted into second-type variables.

In this embodiment of this application, if the computing device determines that the second execution result of the second intermediate code corresponding to the j^{th} subset and the reference execution result do not satisfy the preset condition, the computing device determines that the variables in the j^{th} subset cannot be converted into second-type variables, and the computing device performs the following steps.
(1) Divide the variables in the j^{th} subset into m subsets, where each subset includes different variables in the j^{th} subset.
(2) For any one of the m subsets obtained by dividing the j^{th} subset, perform an operation the same as that for the j^{th} subset in S1023 on the subset. To be specific, the subset is used as the j^{th} subset, and whether variables in the subset can be converted from first-type variables into second-type variables is determined according to the method in S1023. If the computing device determines that the variables in the subset cannot be converted from first-type variables into second-type variables, the subset is used as the j^{th} subset. After determining whether the variables in each subset obtained by dividing the j^{th} subset can be converted into second-type variables, the computing device performs the foregoing steps (1) and (2) again.

It should be understood that, after determining that variables in a subset cannot be converted from first-type variables into second-type variables, the computing device performs the foregoing steps (1) and (2) by using the subset as the j^{th} subset. Until a quantity of variables in a last subset is less than or equal to a preset quantity, the computing device stops determining variables that are in the i^{th} set and that can be converted from first-type variables into second-type variables. A specific value of the preset quantity is not specifically limited in embodiments of this application. For example, the preset quantity is 10. When a quantity of variables in one subset is 18, and the computing device determines that the variables in the subset cannot be converted from first-type variables into second-type variables, the variables in the subset are divided into two subsets, and each subset includes nine variables. When the computing device determines that nine variables in one subset cannot be converted into second-type variables, the computing device no longer divides the nine variables into a plurality of subsets.

S1024: Convert the variables in the i^{th} set in the second code into second-type variables.

When the first execution result of the first intermediate code corresponding to the i^{th} set and the reference execution result satisfy the preset condition, the computing device determines that all the variables in the i^{th} set can be converted into second-type variables. In this case, when deploying code corresponding to the application, the computing device performs deployment after variables that are in the code of the application and that belong to the i^{th} set are converted into second-type variables.

The foregoing uses the i^{th} set in the n sets as an example to describe how to determine variables that are in the i^{th} set and that can be converted from first-type variables into second-type variables. It should be understood that the computing device uses the foregoing method for each of the n sets, to determine variables that are in each set and that can be converted from first-type variables into second-type variables, so as to determine variables that are in the second code and that can be converted from first-type variables into second-type variables.

S103: The computing device converts, into second-type variables, the determined variables that are in the second code and that can be converted into second-type variables, to obtain first code.

After determining, according to the foregoing method, the variables that are in the second code and that can be converted from first-type variables into second-type variables, to obtain first target variables, the computing device converts a variable type of the first target variables in the second code from first type into second type, to obtain the first code. The first target variable s are variables that are in the second code, that can be converted from first-type variables into second-type variables, and that are determined by the computing device. It should be understood that a part of first-type variables in the second set may be converted from first-type variables into second-type variables, or all first-type variables may be converted from first-type variables into second-type variables.

S104: The computing device separately deploys the first code in different hardware chips.

In this embodiment of this application, computing resources include a CPU, a GPU, an NPU, a TPU, a DPU, an APU, an FPU, an ASIC, a PLD, an FPGA, or the like. The different hardware chips are suitable for computing different operators and data types. For example, the CPU is good at logic judgment, and a general-purpose GPU (General-Purpose GPU, GPGPU) in a GPU generally supports high-precision data computation, but an NPU dedicated for deep learning generally supports only low-precision data computation. For example, input data of a general matrix multiplication (General Matrix Multiplication, GEMM) operator is high-precision data, for example, FP128 data or FP64 data, and computation of the operator can be completed more quickly by using the GPGPU. When the input data of the operator is low-precision data, for example, FP32 or FP16, computation of the operator can be completed more quickly by using the NPU. For ease of description, in this embodiment of this application, if variable types of variables included in two operators are different but names of the operators are the same, the two operators are considered as different operators. That is, operators with a same operator name but different data types of input data are used as different operators. For example, when the input data is FP64 data, the GEMM operator is one type of operator. When the input data is FP32 data, the GEMM operator is another type of operator.

The computing device stores operators that the different hardware chips are suitable for computing. After obtaining the first code, during application deployment, the computing device can deploy the different operators in the suitable hardware chips in a unit of an operator based on the operators that the different hardware chips are suitable for computing, to implement operation acceleration. For example, the computing device stores optimization degrees of the different hardware chips for the different operators. The optimization degrees indicate a processing speed at which the hardware chips processes the corresponding operators. A higher optimization degree of one hardware chip for one operator indicates a higher speed at which the hardware chip processes the operator. As shown in FIG. 2, for one operator X, computing resources includes a total of four types of hardware chips: a hardware chip A, a hardware chip B, a hardware chip C, and a hardware chip D. Both the hardware chip A and the hardware chip B are suitable for computing the operator X, and an optimization degree of the hardware chip A for the operator X is higher than an optimization degree of the hardware chip B for the operator X. In this case, the operator X is allocated to the hardware chip A for computing. For example, the operator X is a triangular matrix solving operator, and hardware chips that are in the computing resources and that are suitable for computing the operator include a GPU and an NPU. A type of variables in the operator is FP64, the variables are high-precision variables, and an optimization degree of the GPU for the operator is higher than an optimization degree of the NPU for the operator. Therefore, this operator is allocated to the GPU for computation.

After obtaining the first code, the computing device replaces the second code with the first code for deployment. A quantity of first-type variables in the first code is less than that in the second code. Therefore, in a process of executing the first code, the application occupies less memory, a computation amount and an amount of data in a computation process can be reduced, and an amount of transmitted data can further be reduced.

In another possible implementation, after determining the variables that are in the second code and that can be converted from first-type variables into second-type variables, to obtain the first code, the computing device determines, according to the foregoing method, variables that are in the first code and that can be converted from second-type variables into third-type variables. Precision of data corresponding to the third-type variable is lower than precision of data corresponding to the second-type variable. In this case, the second-type variables in the first code are equivalent to the first-type variables in the second code. In second-type variables in the first code, variables that are in the first code and that can be converted from second-type variables into third-type variables are determined according to the foregoing method, to obtain second target variables, and a variable type of the second target variables in the first code is converted from second type into third type, to obtain third code. The second-type variables in the first code include original second-type variables in the second code and the second-type variables obtained by converting the first-type variables. Then, the computing device deploys different operators in suitable hardware chips based on operators in the third code and variable types of variables in the operators, to implement operation acceleration.

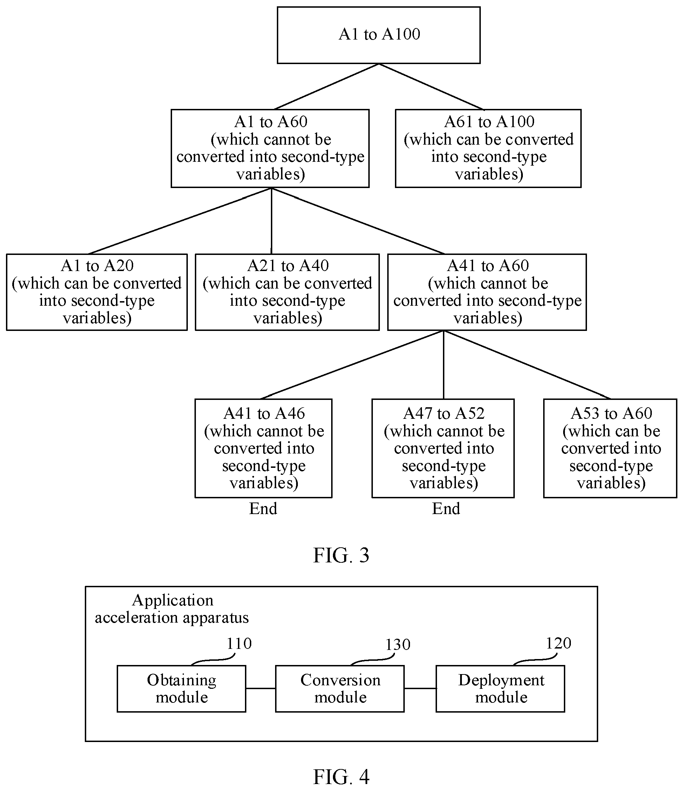

The following describes S101 to S104 in detail by using a specific example. FIG. 3 is a diagram of determining whether variables can be converted according to an embodiment of this application. The second code includes a total of 100 variables: A1 to A100, and a variable type of each variable is FP64. The computing device needs to first determine whether all the 100 FP64-type variables can be converted into FP32-type variables. The computing device first converts the 100 FP64-type variables in the second code into FP32-type variables, and then runs converted second code, to obtain an execution result. If the execution result and the reference execution result do not satisfy the foregoing preset condition, the 100 variables A1 to A100 are divided into a plurality of sets. As shown in FIG. 3, A1 to A100 are divided into two sets. A 1^{st} set includes the variables A1 to A60, and a 2^{nd} set includes the variables A61 to A100.

When the computing device determines whether the variables in the 1^{st} set can be converted into FP32-type variables, the computing device first converts the variables A1 to A60 that are in the second code and that belong to the 1^{st} set into FP32-type variables, and the variables A61 to A100 in the 2^{nd} set remain as FP64-type variables, to obtain first intermediate code corresponding to the 1^{st} set. The computing device executes the first intermediate code corresponding to the 1^{st} set, to obtain a first execution result of the first intermediate code corresponding to the 1^{st} set. Similarly, when the computing device determines whether the variables in the 2^{nd} set can be converted into FP32-type variables, the computing device converts the variables A61 to A100 that are in the second code and that belong to the 2^{nd} set into FP32-type variables, and the variables A1 to A60 in the 1^{st} set remain as FP64-type variables, to obtain first intermediate code corresponding to the 2^{nd} set. The computing device executes the first intermediate code corresponding to the 2^{nd} set, to obtain a first execution result of the first intermediate code corresponding to the 2^{nd} set. The computing device can perform the foregoing operations in parallel, and separately determine whether the variables in the 1^{st} set and the 2^{nd} set can be converted into FP32-type variables.

Then, the computing device determines whether the first execution result of the first intermediate code corresponding to the 1^{st} set and the reference execution result satisfy a preset condition. If the preset condition is satisfied, the computing device determines that the variables in the 1^{st} set can be converted into FP32-type variables. If the preset condition is not satisfied, the computing device determines that the variables in the 1^{st} set cannot be converted into FP32-type variables. In addition, the computing device determines whether the first execution result of the first intermediate code corresponding to the 2^{nd} set and the reference execution result satisfy a preset condition. If the preset condition is satisfied, the computing device determines that the variables in the 2^{nd} set can be converted into FP32-type variables. If the preset condition is not satisfied, the computing device determines that the variables in the 2^{nd} set cannot be converted into FP32-type variables.

As shown in FIG. 3, the computing device determines that the variables in the 1^{st} set cannot be converted into FP32-type variables, and the variables in the 2^{nd} set can be converted into FP32-type variables. In this case, the computing device further divides the variables A1 to A60 in the 1^{st} set into a plurality of subsets, for example, three subsets, where a 1^{st} subset includes the variables A1 to A20, a 2^{nd} subset includes the variables A21 to A40, and a 3^{rd} subset includes the variables A41 to A60.

The computing device separately determines whether the variables in the 1^{st} subset, the 2^{nd} subset, and the 3^{rd} subset can be converted into FP32-type variables. First, the computing device converts the variables A1 to A20 that are in the second code and that belong to the 1^{st} subset into FP32-type variables, the variables A21 to A60 in the 2^{nd} subset and the 3^{rd} subset remain as FP64-type variables, and the variables included in the 2^{nd} set remain as the FP64-type variables or may be converted into FP32-type variables, to obtain second intermediate code corresponding to the 1^{st} subset. The computing device executes the second intermediate code corresponding to the 1^{st} subset, to obtain a second execution result of the second intermediate code corresponding to the 1^{st} subset. Similarly, the computing device converts the variables A21 to A40 that are in the second code and that belong to the 2^{nd} subset into FP32-type variables, the variables in the 1^{st} subset and the 3^{rd} subset remain as FP64-type variables, and the variables in the 2^{nd} set remain as the FP64-type variables or may be converted into FP32-type variables, to obtain second intermediate code corresponding to the 2^{nd} subset. The computing device executes the second intermediate code corresponding to the 2^{nd} subset, to obtain a second execution result of the second intermediate code corresponding to the 2^{nd} subset. In addition, the computing device converts the variables A41 to A60 that are in the second code and that belong to the 3^{rd} subset into FP32-type variables, the variables in the 1^{st} subset and the 2^{nd} subset remain as FP64-type variables, and the variables in the 2^{nd} set remain as the FP64-type variables or may be converted into FP32-type variables, to obtain second intermediate code corresponding to the 3^{rd} subset. The computing device executes the second intermediate code corresponding to the 3^{rd} subset, to obtain a second execution result of the second intermediate code corresponding to the 3^{rd} subset. The computing device can perform the foregoing operations in parallel, and separately determine whether the variables in the 1^{st} subset, the 2^{nd} subset, and the 3^{rd} subset can be converted into FP32-type variables.

Then, the computing device determines whether the second execution result of the second intermediate code corresponding to the 1^{st} subset and the reference execution result satisfy a preset condition. If the preset condition is satisfied, the computing device determines that the variables in the 1^{st} subset can be converted into FP32-type variables. If the preset condition is not satisfied, the computing device determines that the variables in the 1^{st} subset cannot be converted into FP32-type variables. Similarly, the computing device determines whether the second execution result of the second intermediate code corresponding to the 2^{nd} subset and the reference execution result satisfy a preset condition. If the preset condition is satisfied, the computing device determines that the variables in the 2^{nd} subset can be converted into FP32-type variables. If the preset condition is not satisfied, the computing device determines that the variables in the 2^{nd} subset cannot be converted into FP32-type variables. The computing device determines whether the second execution result of the second intermediate code corresponding to the 3^{rd} subset and the reference execution result satisfy a preset condition. If the preset condition is satisfied, the computing device determines that the variables in the 3^{rd} subset can be converted into FP32-type variables. If the preset condition is not satisfied, the computing device determines that the variables in the 3^{rd} subset cannot be converted into FP32-type variables.

If the computing device determines that the variables in the 3^{rd} subset cannot be converted into FP32-type variables, the variables in the 1^{st} subset and the 2^{nd} subset can be converted into FP32-type variables. The computing device further divides the variables in the 1^{st} subset into a plurality of subsets, where each subset includes a plurality of variables in the 1^{st} subset. Then, the computing device determines whether the variables in each of the plurality of subsets obtained by dividing the 1^{st} subset can be converted from first-type variables into second-type variables.

Each time after determining that all variables in a subset cannot be converted from first-type variables into second-type variables, the computing device divides the variables in the subset into a plurality of subsets again, and then determines whether variables in each of the plurality of subsets newly obtained through division can be converted into second-type variables. After a quantity of variables in each of the plurality of subsets finally obtained by dividing the subset is less than or equal to a preset quantity, the computing device stops determining variables that are in the second code and that can be converted from first-type variables into second-type variables. For example, the preset quantity is 10, the 2^{nd} subset includes A21 to A40, and a quantity of variables in the subset is 20. After the computing device determines that the variables in the subset cannot be converted from first-type variables into second-type variables, the variables in the subset are then divided into three subsets, and quantities of variables in the subsets are respectively 6, 6, and 7. When the computing device determines that variables in one subset cannot be converted into second-type variables, the computing device no longer divides the variables in the subset into a plurality of subsets.

For ease of description, the foregoing method embodiments are described as a series of actions. However, a person skilled in the art should appreciate that this application is not limited to the described sequence of the actions. For example, S101 and S102 may be performed in parallel. Alternatively, S101 may be first performed, and S 102 is then performed. Alternatively, S102 may be first performed, and S101 is then performed. In addition, a person skilled in the art should also appreciate that all embodiments described in this specification are preferred embodiments, and the related actions are not necessarily mandatory to the present invention.

Another appropriate step combination that can be figured out by a person skilled in the art based on the content described above also falls within the protection scope of this application. In addition, a person skilled in the art should also appreciate that all embodiments described in this specification are preferred embodiments, and the related actions are not necessarily mandatory to the present invention.

The foregoing describes in detail the application acceleration method provided in this application with reference to FIG. 1 to FIG. 3. The following describes a related apparatus and a computing device provided in this application with reference to the accompanying drawings.

FIG. 4 is a diagram of an application acceleration apparatus according to an embodiment of this application. The application acceleration apparatus 100 includes an obtaining module 110 and a deployment module 120. The obtaining module 110 is configured to obtain first code corresponding to an application that needs to be accelerated, where the first code includes one or more different variable types of variables, for example, includes first-type variables, or includes first-type variables and second-type variables, where precision of data corresponding to the first-type variable is higher than precision of data corresponding to the second-type variable. For example, the first-type variables are FP64-type variables, and the second-type variables are FP32-type variables. The deployment module 120 is configured to deploy different operators in the first code in different hardware chips, where the different hardware chips are suitable for computing different operators or different data types of data. The deployment module 120 deploys the different operators in the first code in the different hardware chips based on the operators and variable types of variables in the operators, to accelerate the application.

In a possible implementation, the first code may be obtained by converting second code. The second code may be source code of the application, or the second code may be obtained by converting the source code of the application. The application acceleration apparatus 100 further includes a conversion module 130. The conversion module 130 is configured to: determine variables that are in the second code corresponding to an application and that can be converted from high-precision variables into low-precision variables, to obtain target variables; and then convert the determined variables that can be converted from high-precision variables into low-precision variables into low-precision variables, to obtain the first code. The second code includes one or more variable types of variables. For example, the second code includes only first-type variables. The conversion module 130 determines variables that are in the second code and that can be converted from high-precision first-type variables into low-precision second-type variables, and then converts, into second-type variables, the determined variables that are in the second code and that can be converted into second-type variables, to obtain the first code. Alternatively, the second code includes first-type variables and second-type variables. The conversion module 130 is configured to convert a part or all of first-type variables in the second code into second-type variables, to obtain the first code.

For a method for determining, by the conversion module 130, variables that are in the second code and that can be converted from first-type variables into second-type variables, refer to the operations of determining, by the computing device, variables that are in the second code and that can be converted from first-type variables into second-type variables in S101 to S104 in the foregoing method embodiments. Details are not described herein again. When the second code is code obtained by converting the source code of the application, the second code may be obtained by converting a part of variables in the source code from high-precision variables into low-precision variables according to the foregoing method. In this embodiment of this application, the obtaining module 110, the deployment module 120, and the conversion module 130 may be modules located in a same computing device, or may be modules located in different computing devices. When the modules are located in different computing devices, a part of the modules may run on a same computing device. For example, the obtaining module 110 and the deployment module 120 are located in one computing device, and the conversion module 130 is located in another computing device. When the modules are located in different devices, after determining that first target variables in the second code can be converted from first-type variables into second-type variables, and converting the first target variables in the second code from first-type variables into second-type variables, to obtain the first code, the conversion module 130 sends the first code to the deployment module 120, and the deployment module 120 deploys the operators in the different hardware chips based on the operators in the first code and the variable types of the variables in the operators.

In a possible implementation, the application acceleration apparatus is provided by a cloud service and is abstracted as a cloud service by the cloud service platform. After a user applies for using or purchases the cloud service on the cloud service platform, the cloud service platform provides the cloud service for accelerating the application for the user by using the application acceleration apparatus, a terminal device used by the user may upload, to the cloud service platform through an application program interface (application program interface, API) or on a web page provided by the cloud service platform, source code of the application that needs to be accelerated, and the cloud service platform accelerates the application by using the modules included in the application acceleration apparatus 100.

The obtaining module 110, the deployment module 120, and the conversion module 130 may all be implemented by using software. The following describes implementations of the modules. The conversion module 130 is used as an example. For implementations of other modules, refer to an implementation of the conversion module 130.

The conversion module 130 may include code running on a computing instance. The computing instance may be one of devices such as a physical host, a virtual machine, or a container. The conversion module 130 may include one or more computing instances. For example, when the conversion module divides the second code into n sets, and determines, in parallel, whether variables in each set can be converted into second-type variables, different computing instances are used to determine whether variables in different sets can be converted into second-type variables, and one computing instance is used to determine whether variables in a part of the n sets can be converted into second-type variables.

It should be noted that, when the computing instance is a virtual machine or a container, virtual machines or containers corresponding to the modules may be located in a same physical device, or may be located in different physical devices. When the computing instance is located on the cloud service platform, computing instances corresponding to the modules may be located in a same region (region), or may be distributed in different regions.

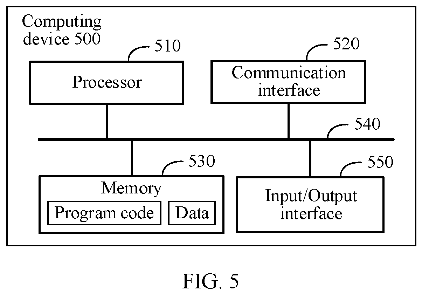

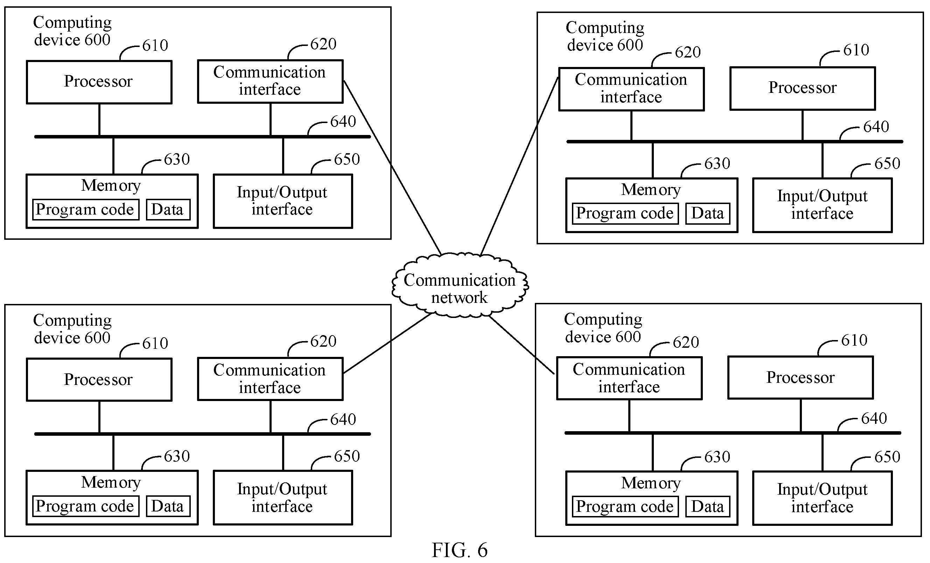

This application further provides an application acceleration system. The system may include one or more computing devices. When the system includes one computing device, for a diagram of a structure of the system, refer to FIG. 5. When the system includes a plurality of computing devices, for a diagram of a structure of the system, refer to FIG. 6.

FIG. 5 is a diagram of a computing device 500 according to an embodiment of this application. The computing device 500 includes one or more processors 510, a communication interface 520, and a memory 530. The processor 510, the communication interface 520, and the memory 530 are connected to each other through a bus 540.

For specific implementation of performing various operations by the processor 510, refer to specific operations in the foregoing method embodiments. For example, the processor 510 is configured to perform the operations of S101 to S104 in FIG. 1. Details are not described herein again.

The processor 510 may have a plurality of specific implementation forms. For example, the processor 510 may be a CPU, a GPU, an NPU, or a TPU, or the processor 510 may be a single-core processor or a multi-core processor. The processor 510 may be a combination of a CPU and a hardware chip. The hardware chip may be an ASIC, a PLD, or a combination thereof. The PLD may be a complex programmable logic device (complex programmable logic device, CPLD), an FPGA, generic array logic (generic array logic, GAL), or any combination thereof. The processor 510 may alternatively be implemented independently by using a logic device with built-in processing logic, for example, an FPGA or a digital signal processor (digital signal processor, DSP).

The communication interface 520 may be a wired interface or a wireless interface, and is configured to communicate with another module or device. The wired interface may be an ethernet interface, a local interconnect network (local interconnect network, LIN), and the like. The wireless interface may be a cellular network interface, a wireless local area network interface, or the like. The communication interface 520 in this embodiment of this application may be specifically configured to perform operations such as obtaining code that is of an application that needs to be accelerated and that is uploaded by a user.

The memory 530 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 530 may alternatively be a volatile memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The memory 530 may also be configured to store program code and data, so that the processor 510 invokes the program code stored in the memory 530, to perform the operation steps for implementing application acceleration in the foregoing method embodiments. In addition, the computing device 500 may include more or fewer components than those shown in FIG. 5, or may have different component configuration manners.

The bus 540 may be a peripheral component interconnect (peripheral component interconnect, PCI) bus, an extended industry standard architecture (extended industry standard architecture, EISA) bus, and or the like. The bus 540 may be classified into an address bus, a data bus, a control bus, and the like. For ease of representation, only one bold line is used for representation in FIG. 5, but it does not indicate that there is only one bus or only one type of bus.

Optionally, the computing device 500 may further include an input/output interface 550. The input/output interface 550 is connected to an input/output device, and is configured to receive input information, output an operation result, and the like.

Specifically, for specific implementation of various operations performed by the computing device 500, refer to specific operations performed in S101 to S104 in the foregoing method embodiments. Details are not described herein again.

The modules in the application acceleration apparatus 100 provided in this application may be deployed in a distributed manner on a plurality of computing devices in a same environment or different environments. Therefore, this application further provides a system shown in FIG. 6. The system includes a plurality of computing devices 600, and each computing device 600 includes one or more processors 610, a communication interface 620, and a memory 630. The processor 610, the communication interface 620, and the memory 630 are connected to each other through a bus 640. The bus 640 may include a path for transmitting information between components (for example, the processor 610, the communication interface 620, and the memory 630) of the computing device 600. For a specific form of the processor 610, refer to related descriptions of the processor 510 in the computing device 500. For a specific form of the communication interface 620, refer to related descriptions of the communication interface 520 in the computing device 500. For a specific form of the memory 630, refer to related descriptions of the memory 530 in the computing device 500. Details are not described herein again.

Optionally, the computing device 600 may further include an input/output interface 650. The input/output interface 650 is connected to an input/output device, and is configured to receive input information and output an operation result.

A communication path is established between the computing devices 600 via a communication network. Any one or more of the obtaining module 110, the deployment module 120, or the conversion module 130 runs on each computing device 600. For example, the obtaining module 110 and the deployment module 120 run on a 1^{st} computing device, and the conversion module 130 runs on a 2^{nd} computing device and a 3^{rd} computing device. The conversion module 130 needs to run code corresponding to an application for a plurality of times, to determine variables that are in the code and that can be converted from high-precision variables into low-precision variables, and needs to determine, in parallel, whether variables in each of a plurality of sets can be converted from high-precision variables into low-precision variables. Therefore, a large quantity of computing resources are required, and the conversion module 130 may be deployed in a plurality of computing devices. After obtaining, from the obtaining module 110, the code of the application that needs to be accelerated, the conversion module 130 performs the method described in S101 to S104. Any computing device 600 may be a computer (for example, a server) in a cloud data center, a computer in an edge data center, or a terminal computing device.

An embodiment of this application further provides a computer-readable storage medium. The computer-readable storage medium stores instructions. When the instructions are run on a processor, method steps in the foregoing method embodiments may be implemented. For specific implementation of performing the method steps by the processor of the computer-readable storage medium, refer to specific operations in the foregoing method embodiments. Details are not described herein again.

In the foregoing embodiments, descriptions of each embodiment have respective focuses. For a part that is not described in detail in an embodiment, refer to related descriptions in other embodiments.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, or a semiconductor medium. The semiconductor medium may be a solid state drive (solid state drive, SSD).

Sequence adjustment, combination, or deletion may be performed on steps in the method in embodiments of this application according to an actual requirement. The modules in the apparatus in embodiments of this application may be divided, combined, or deleted according to the actual requirement.

The foregoing provides detailed descriptions of embodiments of this application. The principle and implementation of this application are described herein through specific examples. The descriptions of embodiments are merely provided to help understand the method and core ideas of this application. In addition, a person of ordinary skill in the art can make variations and modifications to this application in terms of the specific implementations and application scopes according to the ideas of this application. Therefore, the content of this specification shall not be construed as a limitation to this application.

## Claims

1. An application acceleration method, comprising:
obtaining first code corresponding to an application, wherein the first code comprises one or more different variable types of variables; and
deploying operators in the first code in different hardware chips based on the operators in the first code and variable types of variables comprised in the operators.

2. The method according to claim 1, wherein the method further comprises:
obtaining second code corresponding to the application, and converting a part or all of first-type variables in the second code into second-type variables, to obtain the first code, wherein precision of data corresponding to the first-type variable is higher than precision of data corresponding to the second-type variable.

3. The method according to claim 2, wherein the converting a part or all of first-type variables in the second code into second-type variables comprises:
dividing the first-type variables in the second code into n sets, wherein each set comprises a plurality of variables, and n is a positive integer; and
traversing the n sets, determining that variables in an i^{th} set in the n sets can be converted from first-type variables into second-type variables, and converting the variables that are in the second code and that belong to the i^{th} set from first-type variables into second-type variables.

4. The method according to claim 3, wherein the determining that variables in an i^{th} set in the n sets can be converted from first-type variables into second-type variables comprises:
determining a reference execution result obtained by executing the second code;
converting the variables in the i^{th} set into second-type variables, to obtain first intermediate code corresponding to the i^{th} set, and executing the first intermediate code, to obtain a first execution result, wherein i is a positive integer less than or equal to n; and
when the first execution result of the first intermediate code and the reference execution result satisfy a preset condition, determining that the variables in the i^{th} set can be converted from first-type variables into second-type variables.

5. The method according to claim 4, wherein the method further comprises:
when the first execution result of the first intermediate code and the reference execution result do not satisfy the preset condition, dividing the variables in the i^{th} set into m subsets, wherein each subset comprises a plurality of variables in the i^{th} set, and m is a positive integer greater than 1;
converting variables in a j^{th} subset into second-type variables, to obtain second intermediate code corresponding to the j^{th} subset, and executing the second intermediate code, to obtain a second execution result, wherein j is a positive integer less than or equal to m; and
when the second execution result of the second intermediate code and the reference execution result satisfy a preset condition, determining that the variables in the j^{th} subset can be converted from first-type variables into second-type variables.

6. The method according to claim 5, wherein variables in the j^{th} subset in the second intermediate code are second-type variables, variables in m-1 subsets other than the j^{th} subset in the m subsets are first-type variables, variables in a target set in n-1 sets other than the i^{th} set in the n sets are converted into second-type variables, and the target set is a set to which determined variables that can be converted into second-type variables belong.

7. The method according to claim 5, wherein variables in the j^{th} subset in the second intermediate code are second-type variables, variables in m-1 subsets other than the j^{th} subset in the m subsets are first-type variables, and variables in n-1 sets other than the i^{th} set in the n sets are first-type variables.

8. The method according to any one of claims 1 to 7, wherein the deploying operators in the first code in different hardware chips based on the operators in the first code and types of variables comprised in the operators comprises:
determining, based on the operators in the first code, the types of the variables comprised in the operators, and a mapping relationship, the hardware chips configured to execute the operators, and deploying the operators in the first code in the different hardware chips, wherein the mapping relationship comprises optimization degrees of the different hardware chips for the different operators, and the optimization degrees indicate efficiency of processing the corresponding operators by the hardware chips.

9. An application acceleration apparatus, comprising:
a communication module, configured to obtain first code corresponding to an application, wherein the first code comprises one or more different types of variables; and
a deployment module, configured to deploy operators in the first code in different hardware chips based on the operators in the first code and types of variables comprised in the operators.

10. The apparatus according to claim 9, wherein the apparatus further comprises:
a conversion module, configured to: obtain second code corresponding to the application, and convert a part or all of first-type variables in the second code into second-type variables, to obtain the first code, wherein precision of data corresponding to the first-type variable is higher than precision of data corresponding to the second-type variable.

11. The apparatus according to claim 10, wherein the conversion module is specifically configured to:
divide the first-type variables in the second code into n sets, wherein each set comprises a plurality of variables, and n is a positive integer; and
traverse the n sets, determine that variables in an i^{th} set in the n sets can be converted from first-type variables into second-type variables, and convert the variables that are in the second code and that belong to the i^{th} set from first-type variables into second-type variables.

12. The apparatus according to claim 11, wherein the conversion module is specifically configured to:
determine a reference execution result obtained by executing the second code;
convert the variables in the i^{th} set into second-type variables, to obtain first intermediate code corresponding to the i^{th} set, and execute the first intermediate code, to obtain a first execution result, wherein i is a positive integer less than or equal to n; and
when the first execution result of the first intermediate code and the reference execution result satisfy a preset condition, determine that the variables in the i^{th} set can be converted from first-type variables into second-type variables.

13. The apparatus according to claim 12, wherein the conversion module is further configured to:
when the first execution result of the first intermediate code and the reference execution result do not satisfy the preset condition, divide the variables in the i^{th} set into m subsets, wherein each subset comprises a plurality of variables in the i^{th} set, and m is a positive integer greater than 1;
convert variables in a j^{th} subset into second-type variables, to obtain second intermediate code corresponding to the j^{th} subset, and execute the second intermediate code, to obtain a second execution result, wherein j is a positive integer less than or equal to m; and
when the second execution result of the second intermediate code and the reference execution result satisfy a preset condition, determine that the variables in the j^{th} subset can be converted from first-type variables into second-type variables.

14. The apparatus according to claim 13, wherein variables in the j^{th} subset in the second intermediate code are second-type variables, variables in m-1 subsets other than the j^{th} subset in the m subsets are first-type variables, variables in a target set in n-1 sets other than the i^{th} set in the n sets are converted into second-type variables, and the target set is a set to which determined variables that can be converted into second-type variables belong.

15. The apparatus according to claim 13, wherein variables in the j^{th} subset in the second intermediate code are second-type variables, variables in m-1 subsets other than the j^{th} subset in the m subsets are first-type variables, and variables in n-1 sets other than the i^{th} set in the n sets are first-type variables.

16. The apparatus according to any one of claims 9 to 15, wherein the deployment module is specifically configured to:
determine, based on the operators in the first code, the types of the variables comprised in the operators, and a mapping relationship, the hardware chips configured to execute the operators, and deploy the operators in the first code in the different hardware chips, wherein the mapping relationship comprises optimization degrees of the different hardware chips for the different operators, and the optimization degrees indicate efficiency of processing the corresponding operators by the hardware chips.

17. A computing device, comprising a processor and a memory, wherein the memory is configured to store instructions, the processor is configured to execute the instructions, and when the processor executes the instructions, the method according to any one of claims 1 to 8 is performed.

18. A computer program product, wherein the computer program product comprises computer instructions, and when the computer instructions are executed by a computing device, the computing device performs the method according to any one of claims 1 to 8.
